# EUROPEAN PATENT APPLICATION

(11) **EP 4 592 735 A1**
(43) Date of publication of application: **30.07.2025**
(21) Application number: 23878679.2
(22) Date of filing: 26.06.2023
(51) Int. Cl.: G02B 27/01

(54) **DISPLAY APPARATUS AND VEHICLE**

(30) Priority: 17.10.2022 CN 202211271196
(71) Applicant: Shenzhen Yinwang Intelligent Technologies Co., Ltd., Shenzhen, Guangdong 518129 (CN)
(72) Inventor: WANG, Zhiyuan, Shenzhen, Guangdong 518129 (CN); JIA, Lirui, Shenzhen, Guangdong 518129 (CN); DONG, Jungang, Shenzhen, Guangdong 518129 (CN)
(74) Representative: Maiwald GmbH
(86) International application number: PCT/CN2023/102358
(87) International publication number: WO 2024/082682

(57) **Abstract**

A display apparatus (100) and a vehicle are disclosed. The display apparatus (100) includes a curved-surface mirror (20) and a bracket assembly (30). The curved-surface mirror (20) is fastened in a housing (10) of the display apparatus (100) through the bracket assembly (30). The bracket assembly (30) includes a plurality of spaced brackets. The brackets are attached and fastened to a back of the curved-surface mirror (20). The plurality of brackets include a first bracket (31) and a second bracket (32). The first bracket (31) and the second bracket (32) are distributed at two ends of the curved-surface mirror (20) in a length direction. The first bracket (31) and the second bracket (32) rotatably fit the housing (10), to implement rotatable disposition of the curved-surface mirror (20) in the housing (10). Assembly of the curved-surface mirror (20) in the housing (10) is implemented through the separated brackets, and an overall structure size of the bracket assembly (30) is small, so that impact of a deformation difference caused by mismatch of expansion coefficients on attachment strength can be reduced, stability of the curved-surface mirror (20) can be enhanced, an assembly requirement of a large-sized curved-surface mirror (20) can be met, impact of a self-weight and internal stress of a bonding layer on a surface topography of the curved-surface mirror (20) can also be reduced, and imaging quality and a small volume can be ensured.

## Description

This application claims priority to Chinese Patent Application No. 202211271196.9, filed with the China National Intellectual Property Administration on October 17, 2022 and entitled "DISPLAY APPARATUS AND VEHICLE", which is incorporated herein by reference in its entirety.

### TECHNICAL FIELD

This application relates to the field of display technologies, and in particular, to a display apparatus and a vehicle.

### BACKGROUND

With the development of display technologies, projection display is widely applied. For example, a head up display (Head Up Display, HUD for short) technology is increasingly widely applied in fields such as the automobile field, aerospace, and navigation in recent years. For example, in the automobile field, a head up display apparatus can project important driving information such as an hourly speed and navigation to a windshield in front of a driver, and then the important driving information is reflected by the windshield to form a virtual image directly in a line of sight of the driver, allowing the driver to view the information without looking down. This can avoid a risk of distracted driving caused by lowering the driver's gaze, and improve safety.

The head up display apparatus usually includes an image generation module and an optical element. The optical element may include a curved-surface mirror. A surface of the curved-surface mirror is a reflective surface. The image generation module is configured to generate image information (for example, which may include information such as an hourly speed and navigation). The reflective surface of the curved-surface mirror can reflect the image information to the windshield for the driver to view. The curved-surface mirror may be rotatably disposed in a housing of the head up display apparatus through an enclosure frame, to implement adjustment of a projection angle and a position of the curved-surface mirror, and meet different display requirements. The enclosure frame may include a bottom plate and a frame disposed on the bottom plate. The curved-surface mirror is embedded in the enclosure frame, a surface that is of the curved-surface mirror and that is opposite to the reflective surface may be fastened to the bottom plate through bonding, and the frame is disposed around the curved-surface mirror. However, to achieve large field of view display of the head up display apparatus, a size of the curved-surface mirror is increasingly large, for example, a length is greater than 350 mm, and a length and an area of the enclosure frame are also increased accordingly. However, a difference between a coefficient of thermal expansion (Coefficient of Thermal Expansion, CTE for short) value of the enclosure frame and a coefficient of thermal expansion value of the curved-surface mirror is large. As a result, a thermal expansion deformation difference between the enclosure frame and the curved-surface mirror is increased, resulting in strong internal stress, affecting strength of bonding between the curved-surface mirror and the enclosure frame, and reducing stability of disposition of the curved-surface mirror.

### SUMMARY

This application provides a display apparatus and a vehicle, to effectively reduce a deformation difference that is between a bracket assembly and a curved-surface mirror and that is caused by an expansion coefficient difference, and meet a stable and reliable assembly requirement of a large-sized curved-surface mirror.

A first aspect of this application provides a display apparatus, including a housing, and a curved-surface mirror and a bracket assembly that are located in the housing, where the curved-surface mirror has a reflective surface, and the curved-surface mirror is disposed in the housing through the bracket assembly.

The bracket assembly includes a plurality of spaced brackets, and the plurality of brackets are separately attached and fastened to a surface that is of the curved-surface mirror and that is opposite to the reflective surface. The plurality of brackets include at least a first bracket and a second bracket. The first bracket and the second bracket are respectively distributed at two ends of the curved-surface mirror in a length direction. The first bracket and the second bracket rotatably fit the housing separately, so that the first bracket and the second bracket are used to ensure that the curved-surface mirror is balanced and stably fastened in the housing. In other words, the curved-surface mirror can be rotatably disposed in the housing through the two brackets that are disposed separately, to meet a stable assembly requirement of the curved-surface mirror. The curved-surface mirror is disposed in the housing through the bracket assembly, and an acting force in a rotation process directly acts on the bracket assembly, so that impact of an external force on a surface topography of the curved-surface mirror can be reduced or avoided. This helps ensure imaging quality of the curved-surface mirror.

In addition, lengths, sizes, and the like of the separated and independent brackets are small, an overall structure size of the bracket assembly is small, an amount of expansion of the bracket assembly is reduced, a deformation difference that is between the bracket assembly and the curved-surface mirror and that is caused by an expansion coefficient difference can be reduced, impact of deformation caused by mismatch of expansion coefficients of the bracket assembly and the curved-surface mirror on stress of a bonding layer is reduced, a risk like fracture of the bonding layer between the brackets and the curved-surface mirror is reduced or avoided, and stability and reliability of disposition of the curved-surface mirror can be effectively improved. In this way, the bracket assembly can realize assembly of a large-sized curved-surface mirror and meet an assembly requirement of the large-sized curved-surface mirror. Because the length, the size, and the like of the bracket are small, a forming material of the bracket may be a material with a small expansion coefficient, so that the bracket can have higher strength, and rigidity of the bracket assembly is suitable. This helps improve assembly strength of the curved-surface mirror.

In addition, the bracket also has a light weight, and assembly of a large-sized curved-surface mirror can be implemented by using the lightweight bracket. In this way, impact of the weight of the bracket on a change in the surface topography of the curved-surface mirror is effectively reduced, and impact on imaging of the curved-surface mirror is reduced. In addition, a plurality of small-sized brackets are flexibly arranged, and layout is compact. This helps reduce a size of the entire display apparatus. An area of the bonding layer between the bracket and the curved-surface mirror is also small, and internal stress of the glue bonding layer has small impact on the surface topography of the curved-surface mirror. This also helps improve imaging quality.

In a possible implementation, the apparatus further includes a driving piece fastened in the housing. The driving piece fits the bracket assembly, and the driving piece is configured to drive, through the bracket assembly, the curved-surface mirror to rotate, so that a driving force directly acts on the bracket assembly. This can reduce or avoid a risk of a surface topography change caused by the driving force acting on the curved-surface mirror, and further ensure the imaging quality of the curved-surface mirror.

In a possible implementation, the plurality of brackets further include a third bracket, the third bracket is located between the first bracket and the second bracket, and the driving piece fits the third bracket. The driving force and the acting force of the housing in the rotation process are dispersed on the third bracket, the first bracket, and the second bracket, so that concentration of the acting force on a bracket can be reduced, and internal stress between the bracket and the curved-surface mirror is reduced. This helps improve fastness of bonding between the entire bracket assembly and the curved-surface mirror.

In a possible implementation, the third bracket is provided with an alignment base, the alignment base is connected to a push rod of the driving piece, and the driving piece is configured to push and pull the third bracket to drive the curved-surface mirror to rotate. In this way, the curved-surface mirror is driven to rotate by pushing and pulling the push rod of the driving piece. This structure is simple and easy to implement.

In a possible implementation, a first rotating part is disposed on an end that is of the first bracket and that faces away from the second bracket, the housing is provided with a first rotating groove fitting the first rotating part, and the first bracket implements a rotatable connection through fitting between the first rotating part and the first rotating groove.

A second rotating part is disposed on an end that is of the second bracket and that faces away from the first bracket, the housing is provided with a second rotating groove fitting the second rotating part, and the second bracket implements a rotatable connection through fitting between the second rotating part and the second rotating groove. The first bracket and the second bracket implement rotatable fitting with the housing through the first rotating part and the second rotating part respectively. This implements rotatable fitting between the bracket assembly and the curved-surface mirror and the housing. This structure is simple and easy to implement.

In a possible implementation, the bracket is provided with a first positioning structure, the curved-surface mirror is provided with a second positioning structure fitting the first positioning structure, and the bracket and the curved-surface mirror implement positioning through fitting between the first positioning structure and the second positioning structure. The first positioning structure and the second positioning structure can be used to implement precise positioning of an attachment position of the bracket on the curved-surface mirror. This facilitates alignment of the bracket and the curved-surface mirror in an assembly process, and helps improve assembly precision.

In a possible implementation, the curved-surface mirror is provided with a protruding limiting pole, the bracket is provided with a limiting part, and an end face of the limiting pole abuts against and fits the limiting part. A distance between the bracket and the curved-surface mirror is limited through the limiting pole, and a height of the limiting pole can be accurately controlled, so that the distance between the bracket and the curved-surface mirror can be accurately controlled. This helps implement precision of disposing the curved-surface mirror at a position in the housing, improve optical imaging precision of the curved-surface mirror, and further improve imaging quality of the display apparatus.

In a possible implementation, the apparatus further includes a bonding layer, where the bracket is attached and fastened to the curved-surface mirror through the bonding layer. This facilitates assembly implementation. In addition, in comparison with connection manners such as threaded fastening or clamping, this helps reduce impact on the surface topography of the curved-surface mirror.

In a possible implementation, the bracket includes an attachment surface and a side wall surface that is disposed around a circumference of the attachment surface, and the bonding layer is filled between the attachment surface and the curved-surface mirror.

A surface that is of the curved-surface mirror and that is opposite to the reflective surface is provided with a protruding connecting piece, the connecting piece is located on an outer circumference of the side wall surface, and the bonding layer is filled between the connecting piece and the side wall surface. The connecting piece additionally disposed on the curved-surface mirror is bonded to the side wall surface of the bracket. This can further increase an area of bonding between the bracket and the curved-surface mirror, and improve strength of bonding between the bracket and the curved-surface mirror.

In a possible implementation, the connecting piece includes a plurality of first sub-ribs, and the plurality of first sub-ribs are disposed at intervals. This facilitates demolding of the connecting piece formed during imaging of the curved-surface mirror, and can reduce or avoid impact of demolding on the surface topography of the curved-surface mirror.

In a possible implementation, an alignment groove is provided on the attachment surface, and a groove bottom of the alignment groove is provided with a protruding auxiliary rib.

The surface that is of the curved-surface mirror and that is opposite to the reflective surface is provided with a protruding annular auxiliary piece, the auxiliary piece is inserted into the alignment groove, the auxiliary rib is inserted into the auxiliary piece, and the bonding layer is filled between the auxiliary rib and the auxiliary piece. The auxiliary rib and the auxiliary piece that are additionally disposed can increase the area of bonding between the bracket and the curved-surface mirror. This improves strength of bonding between the bracket and the curved-surface mirror, and helps improve stability and reliability of disposition of the curved-surface mirror.

In a possible implementation, a shape of the auxiliary rib includes at least a cross. The cross-shaped structure can increase an area of the auxiliary rib, thereby increasing an area of contact between the auxiliary rib and the bonding layer. This helps improve strength of bonding between the bracket and the curved-surface mirror.

In a possible implementation, the auxiliary piece includes a plurality of second sub-ribs, and the plurality of second sub-ribs are disposed at intervals. This facilitates demolding of the auxiliary piece during molding of the curved-surface mirror, and facilitates demolding process manufacturing, and can reduce or avoid impact of demolding on the surface topography of the curved-surface mirror.

In a possible implementation, a through slot is provided on the attachment surface, the surface that is of the curved-surface mirror and that is opposite to the reflective surface is provided with a protruding boss, and the boss is inserted into the through slot. Fitting of the boss and the through slot can play a positioning role. In addition, the bonding layer may be filled between the boss and the through slot. The boss and the through slot that are additionally disposed may further increase the area of bonding between the bracket and the curved-surface mirror, and improve strength of bonding between the bracket and the curved-surface mirror.

In a possible implementation, the apparatus further includes an image generation module, where the image generation module is configured to form a display image, and the curved-surface mirror is configured to reflect the display image of the image generation module.

A second aspect of this application provides a vehicle, including any one of the foregoing display apparatuses mounted on the vehicle.

### BRIEF DESCRIPTION OF DRAWINGS

FIG. 1 is a diagram of a display scenario of a head up display apparatus in a vehicle according to an embodiment of this application;
FIG. 2 is a diagram of a structure of a display apparatus according to an embodiment of this application;
FIG. 3 is a diagram of a split structure of a display apparatus according to an embodiment of this application;
FIG. 4 is a diagram of a structure in which a curved-surface mirror and a bracket assembly are assembled according to an embodiment of this application;
FIG. 5 is a diagram in which a curved-surface mirror and a bracket assembly are split according to an embodiment of this application;
FIG. 6 is a diagram of a structure of a first bracket according to an embodiment of this application;
FIG. 7 is a diagram of a back structure of a curved-surface mirror according to an embodiment of this application;
FIG. 8 is a diagram of a partial structure of a part A in FIG. 7;
FIG. 9 is an enlarged view of a partial structure of a part B in FIG. 6;
FIG. 10 is a diagram of a front structure in which brackets and a curved-surface mirror are assembled according to an embodiment of this application;
FIG. 11 is a diagram of a structure of a second bracket according to an embodiment of this application;
FIG. 12 is a diagram of a structure of a third bracket according to an embodiment of this application; and
FIG. 13 is a diagram in which a third bracket and a curved-surface mirror are assembled according to an embodiment of this application.

Descriptions of reference numerals:
100: display apparatus;
10: housing; 11: upper housing; 12: lower housing;
20: curved-surface mirror; 20a: reflective surface; 20b: back;
211a, 211b, and 211c: second positioning structure; 2111: reinforcing rib;
212a, 212b, and 212c: limiting pole; 213a, 213b, and 213c: connecting piece; 2131: first sub-rib;
214a, 214b, and 214c: auxiliary piece; 2141: second sub-rib; 215a, 215b, and 215c: boss;
30: bracket assembly; 31: first bracket; 311: first rotating part; 32: second bracket; 321: second rotating part; 33: third bracket;
311a, 321a, and 331a: attachment surface; 312a, 322a, and 332a: first positioning structure; 313a, 323a, and 333a: limiting part; 314a, 324a, and 334a: alignment groove; 315a, 325a, and 335a: auxiliary rib; 316a, 326a, and 336a: side wall surface; 317a, 327a, and 337a: mounting surface; 318a, 328a, and 338a: through slot; 339: alignment base; and
40: driving piece; 41: push rod; 50: image generation module.

### DESCRIPTION OF EMBODIMENTS

Terms used in implementations of this application are only used to explain specific embodiments of this application, but are not intended to limit this application.

Embodiments of this application provide a display apparatus, which is a display apparatus based on a projection technology, and can project a formed display image to an imaging region, to implement imaging display of the display image. The display apparatus may be a head up display apparatus, or in some possible examples, the display apparatus may be a display apparatus that is used to implement projection display in a virtual reality (Virtual Reality, VR for short) technology or an enhanced reality (Augmented Reality, AR for short) technology.

In embodiments of this application, for example, the display apparatus is a head up display apparatus. The head up display apparatus may be applied to the automobile field (for example, an intelligent vehicle), the aerospace field (for example, an aircraft like an airplane), the navigation field (for example, a ship), and the like. For example, a head up display apparatus (HUD apparatus) on a vehicle is used as an example for description.

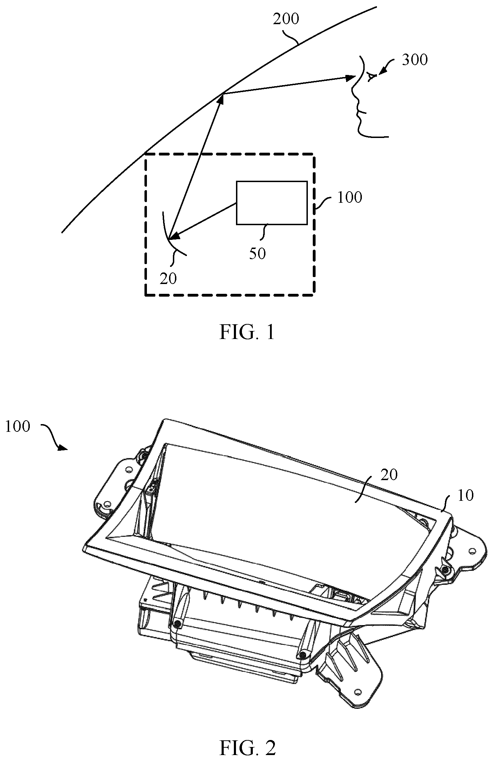

FIG. 1 is a diagram of a display scenario of a head up display apparatus in a vehicle according to an embodiment of this application.

As shown in FIG. 1, the vehicle may include a vehicle body (not shown in the figure) and a windshield piece 200 located at a front end of the vehicle body. The windshield piece 200 may be windshield glass at the front end of the vehicle body.

Certainly, in some other examples, the vehicle may further include another structure to complete a function of the vehicle. For example, the vehicle may further include a braking system, a drive system, a camera, a sensor, and the like.

The vehicle further includes a display apparatus 100. The display apparatus 100 may be disposed below the windshield piece 200, for example, may be located below a dashboard housing of the vehicle. The display apparatus 100 may include an image generation module 50 and a reflection unit. Because the windshield glass is of a curved-surface lens structure, the reflection unit is mostly a curved-surface mirror 20, and the curved-surface mirror 20 has a reflective surface. The image generation module 50 may form a display image including one or more of road information, speed information, driving indication information, navigation information, and the like, and project the display image on the reflective surface of the curved-surface mirror 20. The reflective surface of the curved-surface mirror 20 may reflect the display image to the windshield piece 200. The windshield piece 200 can reflect the display image for receiving by an eye 300 of a driver. The display image is reflected by the windshield piece 200, and a visible virtual image is formed in an imaging region on a side that is of the windshield piece 200 and that is away from the eye 300 of the driver, so that the display image is displayed, and the driver can obtain related information on the front-end windshield glass. This reduces a traffic risk caused by distraction or the like.

The display apparatus 100 may further include a housing (not shown in the figure). The image generation module 50 and the curved-surface mirror 20 may be disposed in the housing, and a transparent region may be formed on the housing. The display image reflected by the curved-surface mirror 20 may be projected to the windshield piece 200 through the transparent region.

It should be understood that, in some other examples, the windshield piece may be a mechanical part of another type, for example, may be an imaging screen. The display apparatus 100 projects the display image to an imaging region on the imaging screen, so that the display image is displayed on the imaging region.

With continuous development of a head up display technology on a vehicle, the head up display technology gradually develops towards augmented reality head up display (Augmented Reality Head up Display, AR-HUD for short). An AR-HUD display apparatus has a large field of view (Field of View, FOV for short), and can superimpose a digital image and the like on a real road environment outside a vehicle, so that a driver obtains a visual effect of augmented reality. This can be used to implement scenarios such as AR navigation, adaptive cruise, and lane deviation warning of the vehicle, and improve driver experience. In the AR-HUD display apparatus, a size of a curved-surface mirror of the AR-HUD display apparatus is usually large, for example, a length of the curved-surface mirror is usually greater than 350 mm.

In addition, to meet different display requirements, the curved-surface mirror may be assembled in a housing of the display apparatus in a rotation manner, so that the curved-surface mirror can rotate. In this way, a projection position and a projection angle of the curved-surface mirror on the windshield piece can be changed. In addition, when the display apparatus is not used, a reflective surface of the curved-surface mirror can be reversed, to reduce or prevent light in an environment from irradiating to the reflective surface through a transparent region of the housing, and reduce impact of the light in the environment on the reflective surface.

In a conventional technology, a rotating shaft and a driving accessory may be integrated on the curved-surface mirror. The curved-surface mirror may be rotatably disposed in the housing through the rotating shaft. The display apparatus may further include a motor. The motor may cooperate with the driving accessory. The motor may drive, through the driving accessory, the curved-surface mirror to rotate. However, when the size of the curved-surface mirror is large (for example, the length is greater than 300 mm), the curved-surface mirror is heavy, and therefore, has high requirements on strength of the rotating shaft and the driving accessory, that is, has a high requirement on strength of a molding material of the curved-surface mirror, which is difficult to meet. In addition, a driving force of the driving piece and an acting force between the rotating shaft and the housing in a rotation process directly act on the curved-surface mirror. This greatly affects a surface topography of the curved-surface mirror, affects imaging of the curved-surface mirror, and causes poor imaging quality of the display apparatus.

Therefore, in the conventional technology, the curved-surface mirror may alternatively be separated from the rotating shaft and the driving accessory. For example, the curved-surface mirror is disposed in the housing through an enclosure frame, where the enclosure frame includes a bottom plate and a frame disposed around the bottom plate. The curved-surface mirror may be pasted on the bottom plate in a pasting manner, and the enclosure frame surrounds the curved-surface mirror, so that the curved-surface mirror is embedded in the enclosure frame as a whole. Rotating shafts may be disposed on two opposite sides of the frame. The rotating shafts rotatably fit the housing, so that the curved-surface mirror is rotatably disposed in the housing through the enclosure frame. The driving accessory may also be disposed on one side of the frame, and fit the motor, to drive, through the motor, the enclosure frame and the curved-surface mirror to rotate.

However, a difference between a thermal expansion coefficient of the enclosure frame and a thermal expansion coefficient of the curved-surface mirror is large. For example, the enclosure frame usually uses a material with a small expansion coefficient and strong strength. However, the expansion coefficient of the curved-surface mirror is usually large, and an expansion amount is usually related to a length, an area, and the like. When the size of the curved-surface mirror is large, a size like a length and an area of the enclosure frame is also large, an amount of expansion of the enclosure frame is large, and an amount of expansion of the curved-surface mirror is small. In this way, a large expansion and deformation difference between the enclosure frame and the curved-surface mirror is caused. In a high or low temperature case, a deformation difference between the enclosure frame and the curved-surface mirror is increased, and strong internal stress is generated. Consequently, strength of bonding between the enclosure frame and the curved-surface mirror is reduced, a risk like bonding glue fracture exists, and stability and reliability of disposition of the curved-surface mirror are reduced.

In addition, the enclosure frame is also heavy, and an acting force is generated on the curved-surface mirror due to impact of a self-weight, which causes a change in the surface topography of the curved-surface mirror, and affects imaging quality of the curved-surface mirror. In addition, a thickness and a volume of the enclosure frame are also large. In this way, a size of the entire display apparatus is large, and large space needs to be occupied. In addition, an area of bonding between the enclosure frame and the curved-surface mirror is large, and internal stress of bonding glue also greatly affects the surface topography of the curved-surface mirror. This reduces imaging quality.

In view of this, according to the display apparatus provided in embodiments of this application, a plurality of brackets with a smaller length size are used to implement rotatable disposition of the curved-surface mirror in the housing. When an assembly requirement of the curved-surface mirror is met, a deformation difference caused by a difference between expansion coefficients of the brackets and the curved-surface mirror can be effectively reduced, and impact of a self-weight, internal stress of bonding glue, and the like on the surface topography of the curved-surface mirror can be further reduced. In addition, when stable and reliable assembly of a large-sized curved-surface mirror is implemented, imaging quality is ensured, and a small volume size is achieved.

The following describes in detail a display apparatus provided in embodiments of this application with reference to the accompanying drawings.

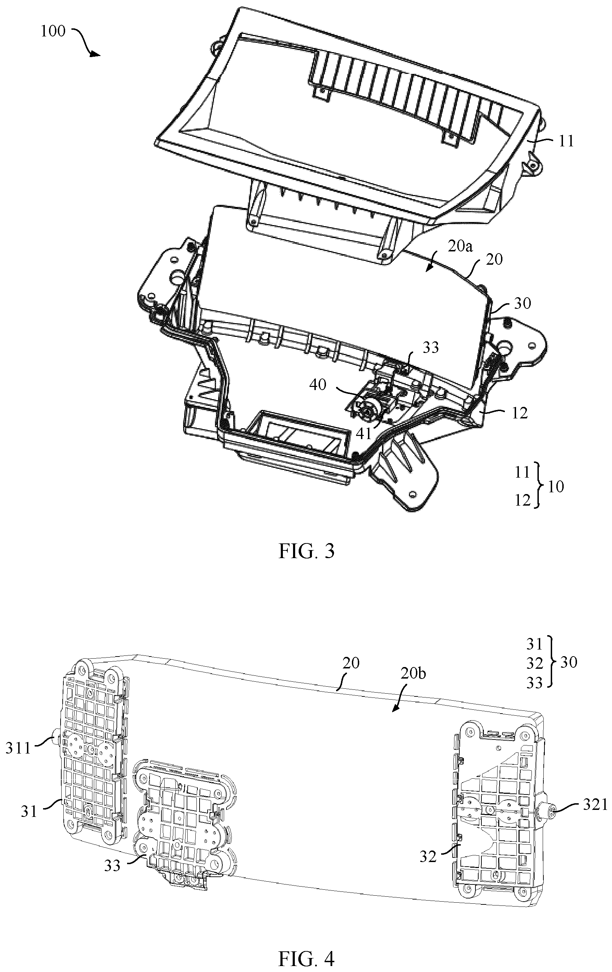

FIG. 2 is a diagram of a structure of a display apparatus according to an embodiment of this application. FIG. 3 is a diagram of a split structure of the display apparatus according to an embodiment of this application.

As shown in FIG. 2 and FIG. 3, the display apparatus 100 may include a housing 10, a curved-surface mirror 20, and a bracket assembly 30. The housing 10 may be used as a bearing mechanical part of the entire display apparatus 100. A cavity may be disposed inside the housing 10. The curved-surface mirror 20, the bracket assembly 30, a driving piece 40, and the like included in the display apparatus 100 may all be disposed in the cavity of the housing 10. For example, as shown in FIG. 3, the housing 10 may include an upper housing 11 and a lower housing 12, and the upper housing 11 and the lower housing 12 are fastened together to form the housing 10.

The curved-surface mirror 20 may include a reflective surface 20a, and an image generation module (not shown in the figure) may be further disposed in the housing 10. The image generation module can form a to-be-projected display image, and project the formed display image on the reflective surface 20a of the curved-surface mirror 20. The reflective surface 20a may reflect the display image outside the housing 10, so that the display image is projected to a windshield piece.

For example, the image generation module may include a light source and an image forming module, and a display image is formed after light emitted by the light source passes through the image forming module. Certainly, in some other examples, the image generation module may alternatively be another structure that can form a display image. For example, the image generation module may alternatively be a micro light emitting diode display chip.

Still as shown in FIG. 3, the driving piece 40 may be further fastened in the housing 10, and the driving piece 40 is configured to drive the curved-surface mirror 20 to rotate. The driving piece 40 may be a driving motor, for example, a linear motor. The driving piece 40 may include a push rod 41. The push rod 41 may be an output end of the driving piece 40, and the push rod can perform linear motion under an action of the driving piece 40. Certainly, in some other examples, the driving piece 40 may alternatively be a motor of another type.

Certainly, in some other examples, the display apparatus 100 may further include another mechanical part, for example, may further include a planar reflection mirror. The planar reflection mirror may be located on an optical path between the image generation module and the curved-surface mirror, or the planar reflection mirror may be located on an optical path between the curved-surface mirror and the windshield piece.

The curved-surface mirror 20 is assembled and fastened in the housing 10 through the bracket assembly 30. For example, the curved-surface mirror 20 may be fastened to the bracket assembly 30, and the bracket assembly 30 may be assembled with the housing 10, so that the curved-surface mirror 20 is disposed in the housing 10.

FIG. 4 is a diagram of a structure in which the curved-surface mirror and the bracket assembly are assembled according to an embodiment of this application.

As shown in FIG. 4, a back 20b of the curved-surface mirror 20 is a surface that is on the curved-surface mirror 20 and that is opposite to the reflective surface, the bracket assembly 30 may include a plurality of independent brackets (for example, a first bracket 31, a second bracket 32, and a third bracket 33) that are distributed at intervals, and the plurality of brackets are separately attached and fastened to the back 20b, to implement fastening and assembly of the curved-surface mirror 20 on the bracket assembly 30.

For example, each bracket may be bonded and attached to the back 20b. This can resolve a problem that the curved-surface mirror 20 cannot be fastened by adding a screw rod, a buckle, or the like. In addition, bonding-based connection helps reduce impact on a surface topography of the curved-surface mirror.

Specifically, for example, each bracket may have an attachment surface (not shown in the figure). Through glue dispensing, the attachment surface of the bracket may be pasted and fastened to the back 20b of the curved-surface mirror 20, and a bonding layer (not shown in the figure) is formed between the attachment surface of each bracket and the back 20b of the curved-surface mirror 20. It should be noted that the brackets are spaced and independently attached to the back 20b of the curved-surface mirror 20. In a glue dispensing process, only a local region of the back 20b needs to be dispensed with glue to be attached to the brackets separately.

There may be at least two brackets, and two of the brackets may be respectively distributed on two ends of the curved-surface mirror 20 in a length direction. It should be noted that the length direction of the curved-surface mirror 20 is a curved-surface radian length direction of the curved-surface mirror 20. As shown in FIG. 4, for example, there are three brackets, and two of the brackets are respectively a first bracket 31 and a second bracket 32. The first bracket 31 and the second bracket 32 are distributed at the two ends of the curved-surface mirror 20 in the length direction at an interval. The first bracket 31 and the second bracket 32 may rotatably fit the housing separately, so that the bracket assembly 30 and the curved-surface mirror 20 on the bracket assembly 30 can rotate relative to the housing. This implements rotatable disposition of the curved-surface mirror 20 in the housing, and implements assembly of the curved-surface mirror 20. In addition, the first bracket 31 and the second bracket 32 that are located at the two ends of the curved-surface mirror 20 in the length direction can also ensure that the curved-surface mirror 20 is balanced and stably fastened in the housing.

In other words, the curved-surface mirror 20 can be rotatably disposed in the housing through the two brackets that are disposed separately, to meet a stable assembly requirement of the curved-surface mirror 20. The curved-surface mirror 20 is disposed in the housing through the bracket assembly 30, and an acting force in a rotation process directly acts on the bracket assembly 30 instead of the curved-surface mirror 20, so that a force-bearing region is separated from an optical imaging region. This can reduce or avoid impact of an external force on the surface topography of the curved-surface mirror 20, and help ensure imaging quality of the curved-surface mirror 20.

In addition, lengths, sizes, and the like of the separated and independent brackets are small, an overall size of a structure of the bracket assembly for fastening the curved-surface mirror 20 is small, an amount of expansion of the bracket assembly is reduced, a deformation difference that is between the bracket assembly and the curved-surface mirror 20 and that is caused by an expansion coefficient difference is reduced, impact of deformation caused by mismatch of expansion coefficients of the bracket assembly and the curved-surface mirror 20 on stress of the bonding layer is reduced, attachment fastness is ensured, a risk like fracture of the bonding layer is reduced or avoided, and stability and reliability of disposition of the curved-surface mirror 20 can be effectively improved. In this way, the bracket assembly 30 can realize assembly of a large-sized curved-surface mirror and meet an assembly requirement of the large-sized curved-surface mirror 20.

In addition, the bracket also has a light weight, and the assembly of the large-sized curved-surface mirror can be implemented by using the lightweight bracket. In this way, impact of the weight of the bracket on a change in the surface topography of the curved-surface mirror 20 is effectively reduced, impact on imaging of the curved-surface mirror 20 is reduced, and imaging quality of the display apparatus is improved. In addition, because of the small bracket sizes, the plurality of brackets are flexibly arranged, and layout of the plurality of brackets is compact. This helps reduce a size of the entire display apparatus and reduce space occupied by the display apparatus 100. For example, space occupation of the entire display apparatus may be reduced by 50%.

In addition, an area of the bonding layer between the bracket and the curved-surface mirror 20 is also small, and internal stress of the glue bonding layer has small impact on the surface topography of the curved-surface mirror 20. This also helps improve the imaging quality.

It should be understood that, when there is a specific difference between an expansion coefficient of the bracket and an expansion coefficient of the curved-surface mirror 20 (which meets an assembly requirement), because the length, the size, and the like of the bracket are small, a forming material of the bracket may be a material with a small expansion coefficient, so that the bracket can have higher strength, and rigidity of the bracket assembly 30 is reliable. This helps improve assembly strength of the curved-surface mirror 20.

In embodiments of this application, the driving piece may alternatively fit the bracket assembly 30, and the driving piece may drive the bracket assembly 30 to move, to drive the curved-surface mirror 20 to rotate relative to the housing. In other words, a driving force of the driving piece directly acts on the bracket assembly 30. This can reduce or avoid a risk of a surface topography change caused by the driving force acting on the curved-surface mirror 20, and further ensure the imaging quality of the curved-surface mirror 20.

The driving piece may fit one of the first bracket 31 and the second bracket 32, or the driving piece may fit another bracket in the bracket assembly 30. For example, still as shown in FIG. 3, the bracket assembly 30 may further include a third bracket 33, and the driving piece may fit the third bracket 33, so that the driving force acts on the third bracket 33. In other words, compared with concentration of the acting force that acts on the housing in the rotation process and the driving force on one bracket, dispersing of the acting force that acts on the housing in the rotation process and the driving force on the third bracket 33, the first bracket 31, and the second bracket 32 can reduce an acting force on a bracket, thereby reducing internal stress between the bracket and the curved-surface mirror 20, and helping improve fastness of bonding between the entire bracket assembly 30 and the curved-surface mirror 20. In embodiments of this application, an example in which the driving piece fits the third bracket 33 is used. A manner in which the driving piece fits the third bracket 33 is described in detail below.

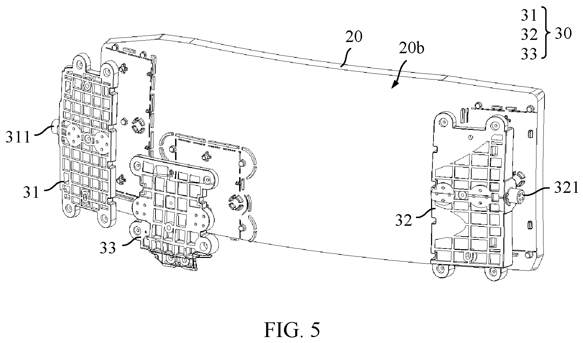

FIG. 5 is a diagram in which the curved-surface mirror and the bracket assembly are split according to an embodiment of this application.

To implement rotation of the curved-surface mirror in the housing, for example, as shown in FIG. 5, a first rotating part 311 may be disposed at one end that is of the first bracket 31 and that is opposite to the second bracket 32, and a first rotating groove (not shown in the figure) fitting the first rotating part 311 may be disposed on the housing. For example, the first rotating part 311 may be a protruding rotating pole at an end face that is of the first bracket 31 and that faces away from the second bracket 32, the first rotating groove may be a groove formed on the housing, and the first rotating part 311 can extend into the first rotating groove and rotate in the first rotating groove.

Correspondingly, a second rotating part 321 may be disposed on one end that is of the second bracket 32 and that is opposite to the first bracket 31, and a second rotating groove (not shown in the figure) fitting the second rotating part 321 may be disposed on the housing. For example, the second rotating part 321 may also be a protruding rotating pole at an end face that is of the second bracket 32 and that faces away from the first bracket 31, and the second rotating groove may also be a groove. The first bracket 31 and the second bracket 32 implement rotatable fitting with the housing through the first rotating part 311 and the second rotating part 321 respectively. This implements rotatable fitting of the bracket assembly 30 and the curved-surface mirror 20 with the housing. This structure is simple and easy to implement.

The following describes in detail a specific implementation in which the bracket is attached and fastened to the curved-surface mirror.

The plurality of brackets may be attached and fastened to the curved-surface mirror 20 in a same manner or in different manners. In embodiments of this application, an example in which the plurality of brackets are attached to the curved-surface mirror 20 in a same manner is used for description.

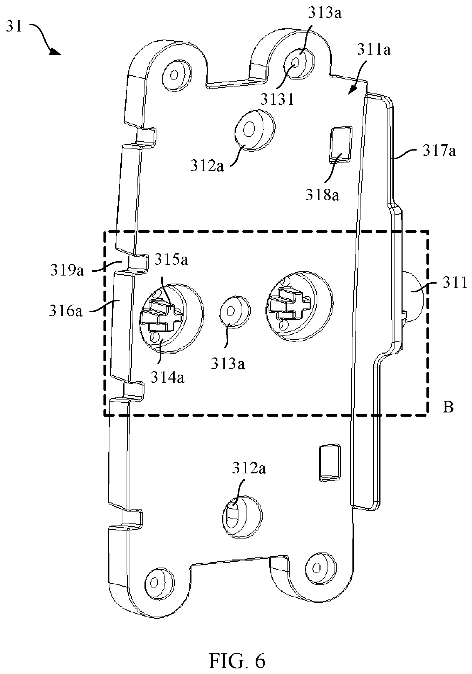

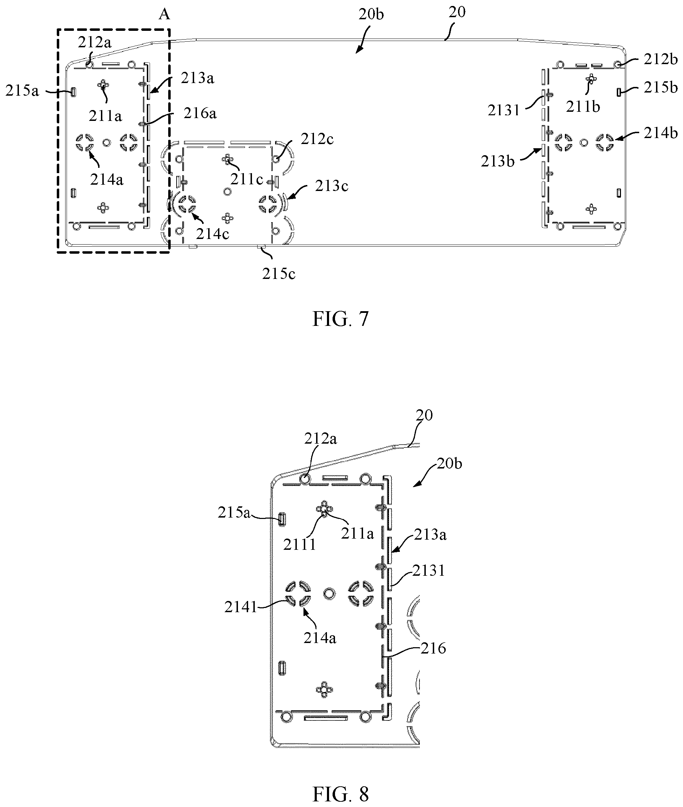

FIG. 6 is a diagram of a structure of the first bracket according to an embodiment of this application. FIG. 7 is a diagram of a back structure of the curved-surface mirror according to an embodiment of this application.

The bracket is attached and disposed on the back of the curved-surface mirror through the bonding layer. For ease of attachment, the bracket may be provided with a first positioning structure, and the curved-surface mirror may be provided with a second positioning structure. The first positioning structure and the second positioning structure fit with each other to accurately locate an attachment position of the bracket on the curved-surface mirror. This facilitates alignment of the first bracket and the curved-surface mirror in an assembly process, and helps improve assembly precision.

For example, the first bracket is used as an example. As shown in FIG. 6, the first bracket 31 may include an attachment surface 311a. The attachment surface 311a faces the back 20b of the curved-surface mirror 20 (as shown in FIG. 5), the attachment surface 311a is attached and fastened to the back 20b, and a bonding layer may be filled between the attachment surface 311a and the back 20b.

The attachment surface 311a may be provided with a first positioning structure 312a. The first positioning structure 312a may be a positioning hole. With reference to FIG. 7, the back 20b of the curved-surface mirror 20 may be provided with a second positioning structure 211a. The second positioning structure 211a may be a positioning pole, and the second positioning structure 211a may extend into the first positioning structure 312a, so as to position an attachment position of the first bracket 31 through the first positioning structure 312a and the second positioning structure 211a.

There may be a plurality of first positioning structures 312a on the first bracket 31, and the plurality of first positioning structures 312a may be distributed at two ends of the first bracket 31 in a width direction (vertical to the length direction). For example, there may be two first positioning structures 312a (as shown in FIG. 6). The plurality of first positioning structures 312a can be used to implement positioning of the first bracket 31 in both the length direction and the width direction, so that positioning accuracy during assembly of the first bracket 31 and the curved-surface mirror 20 can be further improved, and the assembly is more convenient.

Correspondingly, there may be a plurality of second positioning structures 211a on the back 20b of the curved-surface mirror 20 (as shown in FIG. 7). The plurality of second positioning structures 211a are in a one-to-one correspondence with the plurality of first positioning structures 312a.

For example, there are two first positioning structures, and each positioning structure is a positioning hole. A size of one positioning structure in the width direction may be greater than a size of the other positioning structure in the width direction. Strength of interference fitting between the first bracket 31 and the curved-surface mirror 20 is reduced or removed. A size difference helps compensate for tolerances in an assembly or molding process of the first positioning structure and the second positioning structure, and reduce or avoid a phenomenon that alignment and assembly cannot be performed due to interference fitting, and also helps reduce impact of interference fitting on the surface topography of the curved-surface mirror 20.

For example, two first positioning structures are used as an example. One of the first positioning structures may be a circular hole, and the other first positioning structure may be a runway circular hole.

FIG. 8 is a diagram of a partial structure of a part A in FIG. 7.

As shown in FIG. 8, the second positioning structure 211a may be a pole-shaped positioning structure formed by protruding on the back 20b of the curved-surface mirror 20. One end that is of the second positioning structure 211a and that is adjacent to the back 20b may be provided with a reinforcing rib 2111. The reinforcing rib 2111 is separately connected to the second positioning structure 211a and the back 20b, so that strength of the second positioning structure 211a can be improved, and strength of bonding between the bracket and the curved-surface mirror 20 can be improved.

In one side that is of the bracket and that is opposite to the curved-surface mirror and one side that is of the curved-surface mirror and that is opposite to the bracket, a protruding limiting pole may be disposed on one side, and a limiting part may be disposed on the other side. For example, the bracket may be provided with a limiting part, and a side surface that is of the limiting part and that is opposite to the curved-surface mirror may form a limiting surface. The back of the curved-surface mirror may be provided with a protruding limiting pole.

When the bracket is attached and disposed on the curved-surface mirror, an end face that is of the limiting pole and that is away from the back abuts against the limiting surface on the limiting part, and a position of the bracket in a thickness direction (vertical to the length direction and the width direction) is limited through the limiting pole. In other words, a distance between the bracket and the curved-surface mirror is limited. A height of the limiting pole can be accurately controlled, so that the distance between the bracket and the curved-surface mirror can be accurately controlled. This helps improve precision of disposing the curved-surface mirror at a position in the housing, improve optical imaging precision of the curved-surface mirror, and further improve the imaging quality of the display apparatus.

For example, the first bracket is used as an example. As shown in FIG. 6, the first bracket 31 is provided with a limiting part 313a, and a surface that is of the limiting part 313a and that faces the curved-surface mirror may be a limiting surface. With reference to FIG. 7, the back 20b of the curved-surface mirror 20 is provided with a protruding limiting pole 212a. When the first bracket 31 is attached to the curved-surface mirror 20, the limiting pole 212a abuts against the limiting surface of the limiting part 313a, so that a precise distance is maintained between the first bracket 31 and the curved-surface mirror 20.

A glue overflow hole 3131 (as shown in FIG. 6) may be provided on the limiting part 313a. When the bracket is attached and assembled to the curved-surface mirror 20, excess glue may overflow from the glue overflow hole 3131, to reduce impact of a bonding layer formed by glue on the distance between the curved-surface mirror 20 and the bracket, and further ensure precision of disposition of the curved-surface mirror 20.

Certainly, in some other examples, the protruding limiting pole may alternatively be located on a side that is of the bracket and that faces the curved-surface mirror, and a limiting surface may be formed on the back of the curved-surface mirror.

There may be one or more limiting parts and limiting poles. One limiting surface may be formed on one limiting part, and limiting surfaces are in a one-to-one correspondence with the limiting poles. For example, a plurality of limiting parts may be formed at intervals on a circumference of brackets, and a limiting part may also be formed at a central position of the brackets. This helps ensure balance of heights of the brackets, and further improves precision of disposition of the curved-surface mirror.

In embodiments of this application, to enhance fastness of attachment between the bracket and the curved-surface mirror, an alignment groove may be provided on the attachment surface of the bracket, and a protruding auxiliary rib is formed on a groove bottom of the alignment groove. A protruding annular auxiliary piece may be formed on the back of the curved-surface mirror. When the bracket and the curved-surface mirror are attached and assembled, the auxiliary piece may be inserted into the alignment groove, the auxiliary rib may be inserted into a ring of the auxiliary rib, and glue may be filled between the auxiliary rib and the auxiliary piece to form a bonding layer. The auxiliary rib and the auxiliary piece that are additionally disposed can increase an area of bonding between the bracket and the curved-surface mirror. This improves strength of bonding between the bracket and the curved-surface mirror, and helps improve stability and reliability of disposition of the curved-surface mirror.

For example, the first bracket is used as an example. As shown in FIG. 6, a circular alignment groove 314a is formed on the attachment surface 311a of the first bracket 31, and a groove bottom of the alignment groove 314a is provided with a protruding auxiliary rib 315a. As shown in FIG. 7, a protruding annular auxiliary piece 214a is formed on the back 20b of the curved-surface mirror 20. During actual assembly, glue may be dispensed in a ring of the auxiliary piece 214a. When the first bracket 31 is attached to the curved-surface mirror 20, the auxiliary piece 214a is inserted into the alignment groove 314a, and the auxiliary rib 315a in the alignment groove 314a is inserted into the ring of the auxiliary piece 214a. After the glue is solidified, a bonding layer is formed between the auxiliary piece 214a and the auxiliary rib 315a. This enhances strength of bonding between the first bracket 31 and the curved-surface mirror 20.

As shown in FIG. 8, compared with the annular auxiliary piece 214a being an integral ring, the annular auxiliary piece 214a may include a plurality of second sub-ribs 2141 and the plurality of second sub-ribs 2141 may be disposed at intervals in an encircling manner, thereby facilitating demolding of the auxiliary piece 214a when the curved-surface mirror 20 is formed, facilitating demolding manufacturing, reducing or avoiding impact of demolding on the surface topography of the curved-surface mirror 20, and helping ensure imaging precision of the curved-surface mirror 20.

An annular identification part may be further disposed on the back 20b of the curved-surface mirror 20. For example, as shown in FIG. 8, the back 20b is provided with an annular identification part 216. The annular identification part 216 is surrounded to form a glue-coated region. The glue-coated region is opposite to the first bracket 31. During actual assembly, glue may be dispensed in the glue-coated region, and the attachment surface of the first bracket is attached and fastened to the glue-coated region. The identification part serves as a reminder to accurately dispense the glue to the required local region, facilitating assembly operations.

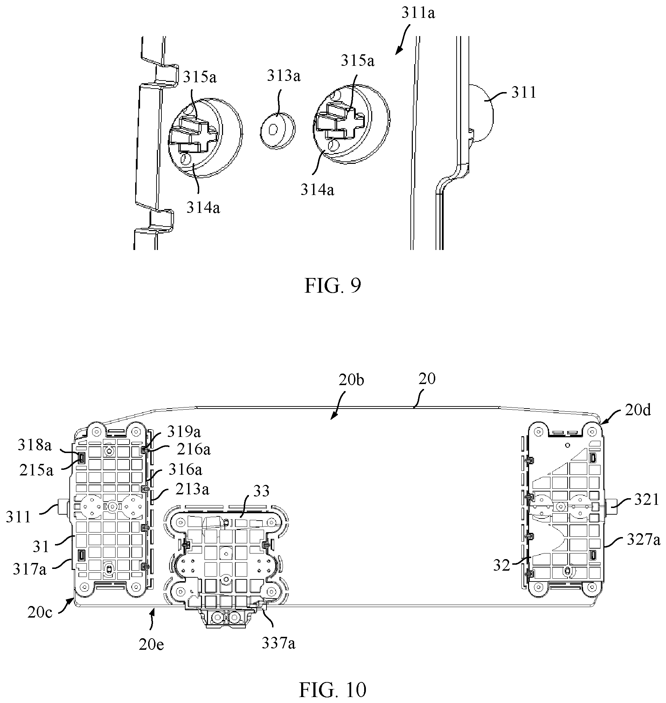

FIG. 9 is an enlarged view of a partial structure of a part B in FIG. 6.

As shown in FIG. 9, a shape of the auxiliary rib 315a may be a cross, that is, the auxiliary rib 315a may be a protruding cross-shaped pole structure formed at the groove bottom of the alignment groove 314a. The cross-shaped structure can increase an area of the auxiliary rib 315a, thereby increasing an area of contact between the auxiliary rib 315a and the bonding layer. This helps improve strength of bonding between the bracket and the curved-surface mirror 20.

Certainly, in some other examples, the shape of the auxiliary rib 315a may alternatively be another regular or irregular pattern, for example, may be a T shape, an X shape, or the like.

There may be one or more alignment grooves and auxiliary pieces. Each alignment groove may have one auxiliary rib, and the auxiliary pieces are in a one-to-one correspondence with auxiliary ribs. For example, as shown in FIG. 9, two alignment grooves 314a may be formed on the first bracket 31, one auxiliary rib 315a may be formed in each alignment groove 314a, and the two alignment grooves 314a may be distributed at intervals in a middle position of the first bracket 31 in the length direction.

To further improve strength of bonding between the bracket and the curved-surface mirror, the bracket may further include a side wall surface, and the side wall surface may be disposed around a circumference of the attachment surface. For example, the first bracket 31 is used as an example. The first bracket 31 includes the attachment surface 311a and a side wall surface 316a (as shown in FIG. 6). The side wall surface 316a may be a wall surface of a side wall in a circumferential direction of the first bracket 31.

The side wall surface 316a may be disposed around a circumference of the attachment surface 311a, or the side wall surface 316 may be disposed on only a part of a circumference of the attachment surface 311a. For example, the first bracket 31 may further include a mounting surface 317a. The mounting surface 317a and the side wall surface 316a jointly surround the circumference of the attachment surface 311a.

FIG. 10 is a diagram of a front structure in which the brackets and the curved-surface mirror are assembled according to an embodiment of this application.

With reference to FIG. 10, the first bracket 31 may be located on one end that is of the curved-surface mirror 20 and that is adjacent to a first side 20c of the curved-surface mirror 20, the mounting surface 317a may be located on an edge that is of the first bracket 31 and that is adjacent to the first side 20c, the mounting surface 317a may extend in the thickness direction, the mounting surface 317a may be attached to a side end surface of the first side 20c, and the first rotating part 311 may be disposed on the mounting surface 317a.

The back of the curved-surface mirror may be provided with a protruding annular connecting piece. When the bracket is attached to the back, the annular connecting piece may be located on an outer circumference of the side wall surface of the bracket. In other words, the connecting piece surrounds the outer circumference of the side wall surface, and there is a gap between the connecting piece and the side wall surface. The bonding layer may be formed by dispensing glue in the gap, so that the area of bonding between the bracket and the curved-surface mirror can be further increased, and the strength of bonding between the bracket and the curved-surface mirror can be improved.

For example, as shown in FIG. 10, the first bracket 31 is attached to the back 20b of the curved-surface mirror 20. There is a gap between the side wall surface 316a of the first bracket 31 and an annular connecting piece 213a on the back 20b. During actual assembly, glue may be dispensed in the gap. After the glue is solidified, the bonding layer is filled between the side wall surface 316a of the first bracket 31 and the connecting piece 213a.

The annular connecting piece may include a plurality of first sub-ribs. For example, the connecting piece 213a is used as an example. The connecting piece 213a may include a plurality of first sub-ribs 2131 (as shown in FIG. 8). The plurality of first sub-ribs 2131 may be disposed at intervals in an encircling manner. This facilitates demolding of a connecting piece formed during imaging of the curved-surface mirror 20, and can reduce or avoid impact of demolding on the surface topography of the convex-surface mirror.

A through slot may be further disposed on the attachment surface of the bracket, and the back of the curved-surface mirror may be provided with a protruding boss. When the bracket is attached and assembled to the curved-surface mirror, the boss may be inserted into the through slot, and the boss and the through slot may play a positioning role. This further facilitates precise positioning of the attachment position of the bracket on the curved-surface mirror. The bonding layer may also be filled between an outer wall of the boss and an inner wall of the through slot, so that the area of bonding between the bracket and the curved-surface mirror can be further increased, and the strength of bonding between the bracket and the curved-surface mirror can be improved.

For example, the first bracket is used as an example. The attachment surface of the first bracket 31 is provided with a through slot 318a (as shown in FIG. 6), and the back 20b of the curved-surface mirror 20 is provided with a boss 215a (as shown in FIG. 7 and FIG. 8). As shown in FIG. 10, the first bracket 31 is attached to the back 20b of the curved-surface mirror 20, and the boss 215a is inserted into the through slot 318a. During actual assembly, glue may be dispensed in a gap between the through slot 318a and the boss 215a. After the glue is solidified, the bonding layer is formed between the boss 215a and the through slot 318a.

Certainly, in some other examples, the through slot may alternatively be disposed on another surface of the bracket. For example, the through slot may alternatively be disposed on a mounting surface of the bracket, and a boss is formed on a side surface of the curved-surface mirror.

To further improve accuracy of positioning of the bracket and the curved-surface mirror, a third positioning structure and a fourth positioning structure may be respectively disposed on the bracket and the curved-surface mirror. For example, a groove may be formed on a circumferential side wall (namely, the side wall surface) of the bracket, and a protruding positioning pole may be formed on the back of the curved-surface mirror. There may be one or more third positioning structures and fourth positioning structures, and the third positioning structures are in a one-to-one correspondence with the fourth positioning structures.

For example, the first bracket 31 is used as an example. A circumferential side wall (the side wall surface) of the first bracket 31 is recessed inward to form a plurality of grooves 319a (as shown in FIG. 6), and the back 20b of the curved-surface mirror 20 protrudes to form a plurality of positioning poles 216a (as shown in FIG. 7). As shown in FIG. 10, when the first bracket 31 is assembled to the curved-surface mirror 20, the positioning poles 216a can extend into the grooves 319a. This further limits a position of the first bracket 31 on the curved-surface mirror 20 in both the length direction and the width direction, to facilitate alignment during assembly.

The following uses the first bracket as an example to describe a process of attaching and assembling the bracket and the curved-surface mirror.

During actual assembly, for example, glue may be first applied to the back of the curved-surface mirror, where a glue application range is the glue application region enclosed by the identification part, and glue is dispensed in the alignment groove. Then, the attachment surface of the first bracket is attached to the glue application region on the back. The first positioning structure, the second positioning structure, the third positioning structure, the fourth positioning structure, and the like cooperate to ensure that the position of the first bracket is accurate. There is a gap between the side wall surface of the first bracket and the annular connecting piece. The boss of the curved-surface mirror is inserted into the through slot of the first bracket, and there is also a gap between the boss and the through slot. Then, glue is dispensed in the gap between the side wall surface and the connecting piece, and in the gap between the through slot and the boss. After the glue is solidified, the curved-surface mirror and the first bracket can be firmly fastened together.

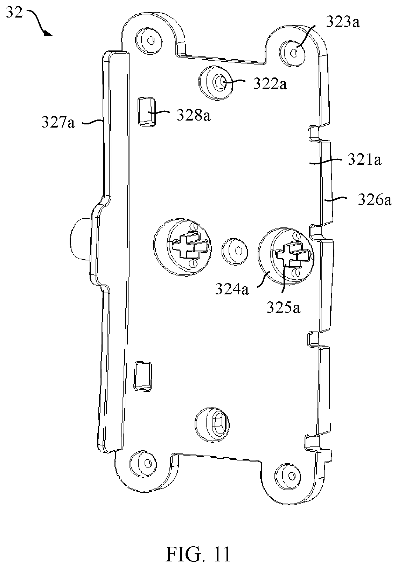

FIG. 11 is a diagram of a structure of the second bracket according to an embodiment of this application.

Correspondingly, as shown in FIG. 11, the second bracket 32 may also include an attachment surface 321a, a side wall surface 326a, and a mounting surface 327a. The side wall surface 326a and the mounting surface 327a jointly surround a circumference of the attachment surface 321a. The attachment surface 321a is attached to the back of the curved-surface mirror (as shown in FIG. 5). A bonding layer may be provided between the attachment surface 321a and the back.

The second bracket 32 may be located on an end that is of the curved-surface mirror 20 and that is adjacent to a second side 20d of the curved-surface mirror 20. The mounting surface 327a may be located on an edge of the second bracket 32 and that is adjacent to the second side 20d (as shown in FIG. 10). The mounting surface 327a may be attached to a side end surface of the second side 20d, and a second rotating part 321 may be disposed on the mounting surface 327a.

Still as shown in FIG. 11, the attachment surface 321a may be provided with a first positioning structure 322a. The first positioning structure 322a fits a second positioning structure 211b (as shown in FIG. 7) on the back 20b of the curved-surface mirror 20. The first positioning structure 322a and the second positioning structure 211b fit with each other to position an attachment position of the bracket on the curved-surface mirror 20. This facilitates alignment and assembly of the second bracket 32 in an assembly process.

Still as shown in FIG. 11, the second bracket 32 may be further provided with a limiting part 323a. A limiting surface may be formed on a surface that is of the limiting part 323a and that faces the curved-surface mirror. When the second bracket 32 is attached and fastened to the curved-surface mirror 20, the limiting surface of the limiting part 323a abuts against a limiting pole 212b on the back 20b (as shown in FIG. 7). Abutting and fitting of the limiting pole 212b and the limiting surface can also limit a distance between the second bracket 32 and the curved-surface mirror 20. This improves precision of mounting of the curved-surface mirror 20.

Still as shown in FIG. 11, an alignment groove 324a may be disposed on the attachment surface 321a, a groove bottom of the alignment groove 324a may protrude to form an auxiliary rib 325a. An annular auxiliary piece 214b (as shown in FIG. 7) on the back 20b of the curved-surface mirror 20 may be inserted into the alignment groove 324a, the auxiliary rib 325a may be inserted into the auxiliary piece 214b, and the bonding layer may be filled between the auxiliary rib 325a and the auxiliary piece 214b, to improve strength of bonding between the second bracket 32 and the curved-surface mirror 20.

The second bracket 32 includes a side wall surface 326a. When the second bracket 32 is attached to the back 20b of the curved-surface mirror 20, the bonding layer is also filled between the side wall surface 326a of the second bracket 32 and an annular connecting piece 213b (as shown in FIG. 7) on the back 20b.

Still as shown in FIG. 11, a through slot 328a is also disposed on the attachment surface 321a of the second bracket 32. When the second bracket 32 is attached to the curved-surface mirror 20, a boss 215b (as shown in FIG. 7) on the back 20b of the curved-surface mirror 20 can be inserted into the through slot 328a, and the bonding layer may be filled between an inner wall of the through slot 328a and an outer wall of the boss 215b.

For specific implementations of the first positioning structure 322a, the limiting part 323a, the auxiliary rib 325a, the side wall surface 326a, the alignment groove 324a, the through slot 328a, and the like, refer to those of the first bracket 31. Details are not described herein again.

In addition, for a process of attaching and assembling the second bracket 32 on the curved-surface mirror 20, refer to that of the first bracket 31. Details are not described herein again.

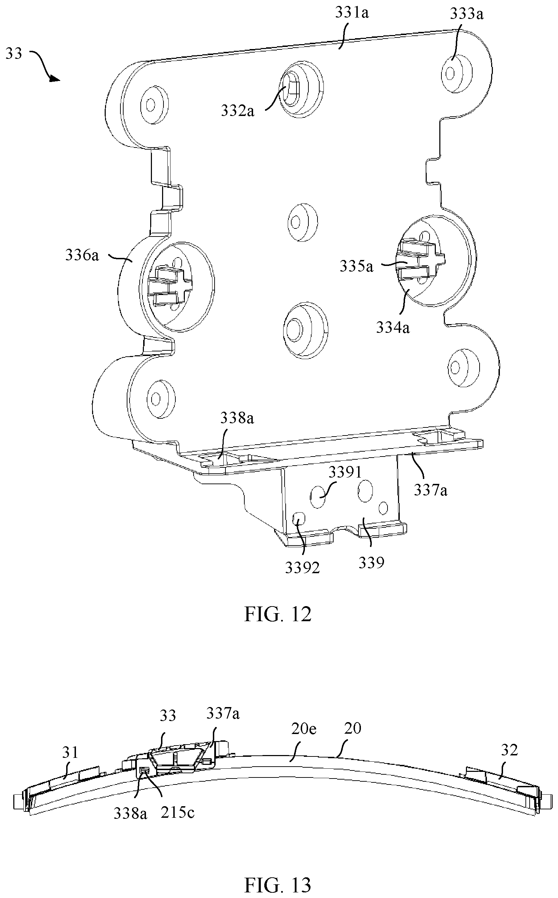

FIG. 12 is a diagram of a structure of the third bracket according to an embodiment of this application.

As shown in FIG. 12, the third bracket 33 may also include an attachment surface 331a, a side wall surface 336a, and a mounting surface 337a. The side wall surface 336a and the mounting surface 337a jointly surround a circumference of the attachment surface 331a. The attachment surface 331a is attached to the back 20b of the curved-surface mirror 20 (as shown in FIG. 5). A bonding layer may be provided between the attachment surface 331a and the back 20b.

The third bracket 33 is located between the first bracket 31 and the second bracket 32. For example, the third bracket 33 may be disposed adjacent to a third side 20e of the curved-surface mirror 20 (as shown in FIG. 10). The mounting surface 337a may be located at an edge that is of the third bracket 33 and that is adjacent to the third side 20e. The mounting surface 337a may be attached to a side end surface of the third side 202. The mounting surface 337a may be connected to and fit with the driving piece 40. In this way, the driving piece 40 can drive, through the third bracket 33, the curved-surface mirror 20 to rotate.

For example, still as shown in FIG. 12, the mounting surface may be provided with an alignment base 339, and the alignment base 339 may be connected to a push rod of the driving piece. For example, an assembly hole 3391 may be provided on the alignment base 339, and a mounting hole (not shown in the figure) may be provided on the push rod. The mounting hole of the push rod and the assembly hole 3391 may be fixedly connected through a fastener like a screw or a horn nail, so as to implement a fixed connection between the push rod of the driving piece and the third bracket 33.

The driving piece may drive the push rod to move in a straight line. For example, the push rod may move in a thickness direction, and the push rod can push or pull the third bracket 33 to move, to drive the bracket assembly and the curved-surface mirror to rotate relative to the housing, so as to implement rotation of the curved-surface mirror in the housing, and adjust a projection position and a projection angle of a display image.

A fifth positioning structure 3392 may be further disposed on the alignment base 339, and a sixth positioning structure (not shown in the figure) may be disposed on the push rod. The fifth positioning structure 3392 and the sixth positioning structure fit with each other to position the push rod and the third bracket 33. This facilitates alignment and assembly of the push rod and the third bracket in an assembly process.

For example, the fifth positioning structure 3392 may be a positioning hole, and the sixth positioning structure may be a protruding positioning pole. There may be one or more fifth positioning structures 3392 and sixth positioning structures, and the fifth positioning structures 3392 may be in a one-to-one correspondence with the sixth positioning structures.

Correspondingly, as shown in FIG. 12, the attachment surface 331a of the third bracket 33 may also be provided with a first positioning structure 332a. The first positioning structure 332a fits a second positioning structure 211c (as shown in FIG. 7) on the back 20b of the curved-surface mirror 20 to position the third bracket 33.

The third bracket 33 may also have a limiting part 333a. A limiting surface may be formed on a surface that is of the limiting part 333a and that faces the back of the curved-surface mirror. The limiting part 333a may abut against a limiting pole 212c (as shown in FIG. 7) on the back 20b of the curved-surface mirror 20, to accurately limit a distance between the third bracket 33 and the curved-surface mirror 20.

An alignment groove 334a may also be disposed on the attachment surface 331a, a groove bottom of the alignment groove 334a may protrude to form an auxiliary rib 335a. An annular auxiliary piece 214c (as shown in FIG. 7) on the back 20b of the curved-surface mirror 20 may be inserted into the alignment groove 334a, the auxiliary rib 335a may be inserted into the auxiliary piece 214c, and the bonding layer may be filled between the auxiliary piece 214c and the auxiliary rib 335a.

Still as shown in FIG. 12, the third bracket 33 includes a side wall surface 336a. The bonding layer is also filled between the side wall surface 336a and an annular connecting piece 213c (as shown in FIG. 7) on the back 20b of the curved-surface mirror 20.

Correspondingly, a through slot may also be disposed on the attachment surface 331a, and the through slot fits a boss on the back of the curved-surface mirror. The bonding layer may be filled between the boss and the through slot, to improve strength of bonding between the third bracket and the curved-surface mirror.

Alternatively, in some other examples, a through slot may alternatively be disposed on another surface of the third bracket 33. For example, as shown in FIG. 12, a through slot 338a may be disposed on the mounting surface 337a. A third side surface of the curved-surface mirror is provided with a protruding boss.

FIG. 13 is a diagram in which the third bracket and the curved-surface mirror are assembled according to an embodiment of this application.

With reference to FIG. 13, when the third bracket 33 is attached to the curved-surface mirror 20, the mounting surface 337a may be attached to a side end surface of the third side 20e. A boss 215c is inserted into the through slot 338a. The bonding layer may be formed by dispensing glue between an outer wall of the boss 215c and an inner wall of the through slot 338a, so that the strength of bonding between the third bracket 33 and the curved-surface mirror 20 can be increased.

For specific implementations of the first positioning structure 332a, the limiting part 333a, the auxiliary rib 335a, the side wall surface 336a, the alignment groove 334a, the through slot 338a, and the like, refer to those of the first bracket 31. Details are not described herein again.

In addition, for a process of fitting and assembling the third bracket 33 on the curved-surface mirror 20, refer to the first bracket 31. Details are not described herein again.

In the descriptions of embodiments of this application, it should be noted that, unless otherwise explicitly stipulated and restricted, terms "mount", "connect to", and "connection" should be understood in a broad sense, which, for example, may be a fixed connection, or may be an indirect connection through an intermediate medium, or may be an internal connection between two elements, or may be an interaction relationship between two elements. A person of ordinary skill in the art may understand specific meanings of the foregoing terms in embodiments of this application based on specific cases. The terms such as "first", "second", "third", "fourth", and the like (if existent) are intended to distinguish between similar objects but do not necessarily indicate a specific order or sequence.

Finally, it should be noted that the foregoing embodiments are merely used to describe the technical solutions in embodiments of this application, but not to limit the technical solutions. Although embodiments of this application are described in detail with reference to the foregoing embodiments, a person of ordinary skill in the art should understand that the technical solutions recorded in the foregoing embodiments may still be modified, or some or all of technical features thereof may be equivalently replaced. However, these modifications or replacements do not depart from the scope of the technical solutions in embodiments of this application.

## Claims

1. A display apparatus, comprising a housing (10), and a curved-surface mirror (20) and a bracket assembly (30) that are located in the housing (10), wherein the curved-surface mirror (20) has a reflective surface (20a), and the curved-surface mirror (20) is disposed in the housing (10) through the bracket assembly (30);
the bracket assembly (30) comprises a plurality of spaced brackets, and the plurality of brackets are separately attached and fastened to a surface that is of the curved-surface mirror (20) and that is opposite to the reflective surface (20a); and
the plurality of brackets comprise at least a first bracket (31) and a second bracket (32), wherein the first bracket (31) and the second bracket (32) are respectively distributed at two ends of the curved-surface mirror (20) in a length direction, and the first bracket (31) and the second bracket (32) rotatably fit the housing (10) separately.

2. The display apparatus according to claim 1, further comprising a driving piece (40) fastened in the housing (10), wherein the driving piece (40) fits the bracket assembly (30), and the driving piece (40) is configured to drive, through the bracket assembly (30), the curved-surface mirror (20) to rotate.

3. The display apparatus according to claim 2, wherein the plurality of brackets further comprise a third bracket (33), the third bracket (33) is located between the first bracket (31) and the second bracket (32), and the driving piece (40) fits the third bracket (33).

4. The display apparatus according to claim 3, wherein the third bracket (33) is provided with an alignment base (339), the alignment base (339) is connected to a push rod (41) of the driving piece (40), and the driving piece (40) is configured to push and pull the third bracket (33) to drive the curved-surface mirror (20) to rotate.

5. The display apparatus according to any one of claims 1 to 4, wherein a first rotating part (311) is disposed on an end that is of the first bracket (31) and that faces away from the second bracket (32), the housing (10) is provided with a first rotating groove fitting the first rotating part (311), and the first bracket (31) implements a rotatable connection through fitting between the first rotating part (311) and the first rotating groove; and
a second rotating part (321) is disposed on an end that is of the second bracket (32) and that faces away from the first bracket (31), the housing (10) is provided with a second rotating groove fitting the second rotating part (321), and the second bracket (32) implements a rotatable connection through fitting between the second rotating part (321) and the second rotating groove.

6. The display apparatus according to any one of claims 1 to 5, wherein the bracket is provided with a first positioning structure (312a), the curved-surface mirror (20) is provided with a second positioning structure (211a) fitting the first positioning structure (312a), and the bracket and the curved-surface mirror (20) implement positioning through fitting between the first positioning structure (312a) and the second positioning structure (211a).

7. The display apparatus according to any one of claims 1 to 6, wherein the curved-surface mirror (20) is provided with a protruding limiting pole (212a), the bracket is provided with a limiting part (313a), and an end face of the limiting pole (212a) abuts against and fits the limiting part (313a).

8. The display apparatus according to any one of claims 1 to 7, further comprising a bonding layer, wherein the bracket is attached and fastened to the curved-surface mirror (20) through the bonding layer.

9. The display apparatus according to claim 8, wherein the bracket comprises an attachment surface (311a) and a side wall surface (316a) that is disposed around a circumference of the attachment surface (311a), and the bonding layer is filled between the attachment surface (311a) and the curved-surface mirror (20); and
a surface that is of the curved-surface mirror (20) and that is opposite to the reflective surface (20a) is provided with a protruding connecting piece (213a), the connecting piece (213a) is located on an outer circumference of the side wall surface (316a), and the bonding layer is filled between the connecting piece (213a) and the side wall surface (316a).

10. The display apparatus according to claim 9, wherein the connecting piece (213a) comprises a plurality of first sub-ribs (2131), and the plurality of first sub-ribs (2131) are disposed at intervals.

11. The display apparatus according to claim 9 or 10, wherein an alignment groove (314a) is provided on the attachment surface (311a), and a groove bottom of the alignment groove (314a) is provided with a protruding auxiliary rib (315a); and
the surface that is of the curved-surface mirror (20) and that is opposite to the reflective surface (20a) is provided with a protruding annular auxiliary piece (214a), the auxiliary piece (214a) is inserted into the alignment groove (314a), the auxiliary rib (315a) is inserted into the auxiliary piece (214a), and the bonding layer is filled between the auxiliary rib (315a) and the auxiliary piece (214a).

12. The display apparatus according to claim 11, wherein a shape of the auxiliary rib (315a) comprises at least a cross.

13. The display apparatus according to claim 12, wherein the auxiliary piece (214a) comprises a plurality of second sub-ribs (2141), and the plurality of second sub-ribs (2141) are disposed at intervals.

14. The display apparatus according to any one of claims 9 to 13, wherein a through slot (318a) is provided on the attachment surface (311a), the surface that is of the curved-surface mirror (20) and that is opposite to the reflective surface (20a) is provided with a protruding boss (215a), and the boss (215a) is inserted into the through slot (318a).

15. The display apparatus according to any one of claims 1 to 14, further comprising an image generation module, wherein the image generation module is configured to form a display image, and the curved-surface mirror is configured to reflect the display image of the image generation module.

16. A vehicle, comprising the display apparatus (100) according to any one of claims 1 to 15 mounted on the vehicle.
